# EUROPEAN PATENT APPLICATION

(11) **EP 3 799 711 A1**
(43) Date of publication of application: **07.04.2021**
(21) Application number: 19200985.0
(22) Date of filing: 02.10.2019
(51) Int. Cl.: A01C 23/04

(54) **DEVICE FOR PREPARING A FERTILIZER SOLUTION FOR USE WITH A FERTIGATION SYSTEM**

(71) Applicant: Yara International ASA, 0277 Oslo (NO)
(72) Inventor: VAN SANTEN, Wouter, 4484 TD Kortgene (NL); BROSS, Remco, 2662 BB Bergschenhoek (NL)
(74) Representative: De Clercq & Partners

(57) **Abstract**

Device for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line, comprising (i) a container (2) for holding an aqueous liquid, wherein the interior of the container is divided into two separate compartments, respectively a mixing compartment (3) and a filtering compartment (4), separated by a vertically positioned filter screen (5) comprising a filter (6), (ii) a mixing means (10) positioned in the mixing compartment (3), (iii) an outlet in the lower half of one of the walls or in the base of the mixing compartment for removal of the insoluble solid matter, and (iv) a dosing system (13) connected, at its input end, to an outlet in the lower half of the filtering compartment for removal of the filtered aqueous solution, and, at its output end, designed to be connected to an external water line.

## Description

### Field of the Invention

This invention relates to a device for preparing a fertilizer solution for use with a fertigation system, in particular for removing insoluble solid matter from an essentially water-soluble substance after dissolution, in particular an essentially water-soluble fertilizer with a low amount of insoluble matter, before the essentially water-soluble substance is dissolved into water and provided to a fertigation system.

### Background

Fertigation is a technique where well-defined amounts of nutrients are dissolved in water from the irrigation system and fed to the irrigated plants. Greenhouses, such as the ones using hydroponics, or substrate-based culture, are generally provided with such systems to supply one or more liquid fertilizers to the crops, grown in said greenhouse. These systems can be relatively simple but may also be part of a more complex fertigation system, including one or more sensors which measure the total water and/or nutrient consumption by the crop, the temperature in the greenhouse, and various other parameters. Simple systems start with the addition of one or more essentially water-soluble fertilizers to water, mixing the essentially water-soluble fertilizer until it is dissolved and feeding the resulting solution to a fertigation system. A very common problem is that the essentially water-soluble fertilizer may contain a (low) amount of insoluble matter, also called fines, which does not dissolve easily. These fines should not enter the hydroponic fertigation system as they could clog the sprinklers, drippers, etc., and hence, such essentially water-soluble fertilizers are not suitable for use in hydroponic systems. This issue also prevents the widespread use of essentially water-soluble fertilizers in hydroponic systems. Therefore, there is a need for a simple system, that preferably operates in the field, preferably without the need for an electricity network, for dissolving in water an essentially water-soluble substance comprising insoluble solid matter, for filtering the aqueous solution of the water-soluble substance to remove the insoluble solid matter, and for dosing the filtered aqueous solution of the water-soluble substance to an external water line.

### Background prior art

Utility model CN 208406339 U (Yunnan Runjie Agricultural Science and Technology Co., January 22, 2019) discloses a rectangular box for the dissolution of potassium sulphite, comprising a motor resting on top of the box and driving a shaft with a stirring vane, which shaft rests on a filter assembly mounted horizontally slanted in the box. The resulting filtered solution is drained at the bottom.

The inventors have now found a solution to the above-mentioned problem.

It is therefore an object of the present invention to provide a device for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line.

### Summary of the Invention

According to one aspect, the invention relates to a device and method for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line as mentioned in the appended claims.

### Description of the drawings

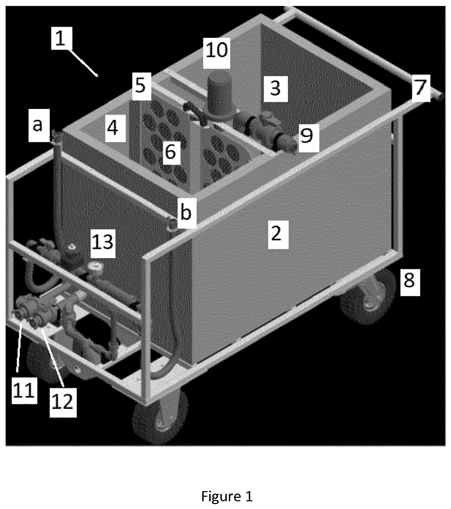

Figure 1 shows a 3D-drawing of an embodiment of the device according to the invention.

### Detailed Description of the invention

Throughout the description and claims of this specification, the words "comprise" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this specification (including any accompanying claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to " as used when referring to a range for a measurable value, such as a parameter, an amount, a time period, and the like, is intended to include the limits associated to the range that is disclosed.

The term "approximately" and "about" as used when referring to a measurable value, such as a parameter, an amount, a time period, and the like, is intended to represent the measurement error associated with the technique to measure such parameter, amount, time period, and the like, and is considered to be 5% or less, depending on the measurement technique used. It should be understood that the value to which the term "approximately "and "about" refers per se has also been disclosed.

The term "essentially" as used when referring to a water-soluble substance is to be interpreted as a water-soluble substance which is, by its very nature, water-soluble at standard conditions, e.g. at room temperature (20 °C) and 1 atm. Such substances have a solubility (defined as the maximum amount of solute that can be dissolved in a solvent at equilibrium) of 50 g/100 ml or more. For instance, ammonium nitrate (solubility of 150 g/100 ml at 20 °C) and urea (solubility of 1079 g/L at 20 °C) are highly soluble substances. Another example of a commercial fertilizer is YaraRega© (13-2-21), a water-soluble NPK compound fertilizer based on ammonium nitrate formulations and containing less than 1 % of insoluble solid matter. This product can be applied through sprinkler pivots, micro sprinklers and some drip systems, but is not suitable for hydroponic systems.

### Device

According to one aspect, the invention relates to a device for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line.

The device according to the invention comprises a container for holding an aqueous liquid, wherein the interior of the container is divided into two separate compartments, respectively designated the mixing compartment and the filtering compartment, separated by a vertically positioned filter screen comprising a filter. The filter screen separates the two compartments such an aqueous liquid in either one of the two compartments is only allowed to traverse from one compartment into the other through the filter.

According to one embodiment, the container has a substantially rectangular shape, defined by four upright rectangular side walls and a rectangular bottom wall. This design allows an easy mounting on a metal frame, preferably provided with wheels such that the frame, carrying the container, is movable by manually pushing the frame. In this way, the device can be positioned in a hydroponic system by an operator close to the water means or water mains and removed again when the filtered aqueous solution has been dosed to the hydroponics system. Alternatively, the container can be permanently connected to the hydroponics system.

According to one embodiment, the volume ratio of the filtering compartment to the mixing compartment ranges from 1:1 to 1:5, preferable is 1:3. It was found practical to mix the aqueous solution in a compartment that is larger in volume than the filtering compartment.

According to one embodiment, the container is made of polyethylene, preferably a non-translucent polyethylene. Polyethylene is a cheap and inert material (for the aqueous solution) that can easily be welded or joined together and has a good mechanical strength to hold the aqueous composition inside and resist the shear forces during mixing. Preferably, it is non-translucent to prevent degradation of the aqueous solution under influence of sunlight when the device is used to store such aqueous composition.

According to one embodiment, the mixing compartment is provided with a water inlet suitable to fill the mixing compartment with an amount of water. This can be a tube extending into the compartment though the top, or through one of the side walls, preferably in the top halve of it. The water inlet is designed to be connected to an external water line to provide the water to the mixing compartment. The water inlet may be equipped with a valve, preferably a manual valve, to dose the water to the mixing compartment. Alternatively, the mixing compartment has no water inlet, but is dosed with water through the open top with a hose connected to an external water line.

According to one embodiment, either one or both of the compartments is closed off by a lid, preferably by a removable lid. This prevents dust from entering the compartments. The lid may be completely removable, or it may be hinged to a side wall of the container.

According to one embodiment, the lid on the mixing compartment comprises an open grid, i.e. a pass-through grid that is open to the mixing compartment. In the extreme, the lid consists of the grid. Preferably, the dimensions of the grid are such that they match the dimensions of a bag of fertilizer, for example 50 x 50 cm. Preferably, the mesh size of the grid is such that it matches or exceeds the dimensions of fertilizer granules, for example 5 to 20 mm. The grid is designed such that it can support a bag of fertilizer, such as a 25 kg plastic bag of fertilizer. For example, the grid is made of metal, such as stainless steel. When the bag is cut open, its granularly content will easily fall into the mixing compartment. According to one embodiment, the grid may further comprise cutting means to cut through a bag of fertilizer, such as a knife, box cutter and the like. Alternatively, the mixing compartment comprises means for adding the essentially water-soluble substance into the mixing compartment, such as a hopper, transport belt and the like. Alternatively, the mixing compartment does not comprise such means; in that case, the operator will need to add the essentially water-soluble substance into the mixing compartment using external means, such as a shovel, a small container, or just manually add part of or all of the content of a bag of fertilizer into the mixing compartment.

The filter screen, comprising a filter, divides the container into two compartments. According to one embodiment, the filter in the filter screen comprises more than about 50 %, preferably more than about 70 %, at most about 95 % of the filter screen surface. The filter can consist of a plurality of individual filter, or it can consist of one large filter. According to one embodiment, the filter comprises a plurality of circular filters, as shown in Figure 1. According to one embodiment, the filter occupies only the bottom half of the filter screen.

According to one embodiment, the filter has a mesh size (opening) ranging between 50 and 200 micrometres, meaning that it can capture and retain particles in the mixing compartment which are larger than 50 to 200 micrometres. The mesh size should be adequate to retain the particles present in the essentially water-soluble substance and prevent them from entering the filtering compartment.

The device according to the invention further comprises a mixing means positioned in the mixing compartment. The mixing means are essential to mix the essentially water-soluble substance comprising insoluble solid matter and the water. According to one embodiment, the mixing means are selected from a manual mixer, a battery-operated 24 V-mixer, a combustion engine-operated mixer, and an electrical 220 V-mixer. When no electricity network is readily available, preferred mixing means are a manual mixer and a battery-operated 24 V-mixer. The mixing means can be fixed in the mixing compartment, or can be movably mounted in the mixing compartment, for example on an horizontal bar over the mixing compartment.

The device according to the invention further comprises an outlet in the lower half of one of the walls or in the base of the mixing compartment for removal of the insoluble solid matter. Using this outlet, the insoluble solid matter can be removed from the mixing compartment by flushing and rinsing the mixing compartment with water. Preferably, such outlet is provided with a valve. Additionally, the filtering compartment comprises an outlet in the lower half of one of the walls or in the base of the filtering compartment for removal of insoluble solid matter. Using this outlet, the insoluble solid matter can be removed from the filtering compartment by flushing and rinsing the filtering compartment with water. Preferably, such outlet is provided with a valve.

The device according to the invention further comprises a dosing system connected, at its input end, to an outlet in the lower half of the filtering compartment for removal of the filtered aqueous solution, and, at its output end, designed to be connected to an external water line. Such dosing system can be, for instance, be a Venturi-based system or a Dosatron©. Dosatron chemical injectors are water-powered, non-electric chemical injectors to accurately inject chemicals into water lines. Dosatron injectors work using volumetric proportioning, ensuring that the chemical mixture remains the same regardless of variations in pressure and flow.

The device according to the invention offers a quick, crude, but surprisingly efficient device for dissolving in water an essentially water-soluble substance comprising insoluble solid matter, for filtering the aqueous solution of the water-soluble substance to remove the insoluble solid matter, and for dosing the filtered aqueous solution of the water-soluble substance to an external water line.

### Method

According to one aspect, the invention relates to a method for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line.

The method comprises the step of providing a device according to the invention. Said device has been designed to operate using the method according to the invention.

The next step is the step of providing an amount of water and essentially water-soluble substance comprising insoluble solid matter into the mixing compartment. According to one embodiment, the water is provided through a water inlet of the device according to the invention, which inlet is suitable to dose the mixing compartment with an amount of water, as explained previously. Alternatively, the mixing compartment has no water inlet, but is dosed with water through the open top with a hose connected to an external water line, or with buckets, or in any way suitable. According to one embodiment, the essentially water-soluble substance is provided through the open top of the mixing compartment, for instance by cutting open a bag supported by the open grid of the device according to the invention. Alternatively, the mixing compartment does not comprise means for adding the essentially water-soluble substance into the mixing compartment, and the essentially water-soluble substance is added using external means, such as a shovel, a small container, or just manually add part of or all of the content of a bag of fertilizer into the mixing compartment. Suitable dosing means can be used to determine the required dose, such as weighting means, volumetric means, or the like.

The next step is the step of activating the mixing means until the essentially water-soluble substance comprising insoluble solid matter is dissolved. This can be through mixing using a mixer with a screw, an agitator or the like. The essentially water-soluble substance will dissolve into the aqueous solution which will be quickly divided over the two compartments through the filter, wherein the insoluble solid matter remains in the mixing compartment. The mixing step may take anything from 1 minute to 30 minutes. The operator can easily visually determine when the essentially water-soluble substance is completely dissolved.

The next step is activating the dosage system. In this way, the filtered aqueous solution of the essentially water-soluble substance is fed at a pre-set or adjustable rate to an external water line, preferably part of an hydroponic system. In this way, the filtered aqueous solution of the essentially water-soluble substance is merged with the water from the external water line and dosed to crops or plants that are fertilized through the hydroponic system.

The entire method can be performed without the need for an electricity network.

The invention also relates to the use of the device according to the invention for removing insoluble solid matter from an essentially soluble fertilizer by dissolution of the essentially soluble fertilizer in water and separation of the insoluble solid matter through filtration. The device is a single unitary device uniting the functions of dissolution, filtration and dosing an aqueous solution of the essentially water-soluble substance, thereby removing insoluble solid matter from the aqueous solution of the essentially water-soluble substance. It is especially suitable for use with YaraRega© (13-2-21), a water-soluble NPK compound fertilizer based on ammonium nitrate formulations and containing less than 1 % of insoluble .

### Preferred embodiment of the device

The device **1** is shown in its preferred embodiment in Figure 1. It comprises a substantially rectangular container **2**, which is divided into a mixing compartment **3** and a filtering compartment **4** by a vertically positioned filter screen **5.** The filter screen comprises a plurality of individual circular filters **6.** The container **2** is mounted on a metal frame 7, provided with wheels **8**, such that the frame, carrying the container, is movable by manually pushing the frame. In the embodiment shown, the volume ratio of the filtering compartment to the mixing compartment is about 1:2. The mixing compartment is provided with a water inlet **9** suitable to fill the mixing compartment with an amount of water and is equipped with a valve. The embodiment shown has no lid. Movable mixing means **10** are provided in the mixing compartment **3.** An outlet in the base of the mixing compartment is provided for removal of the insoluble solid matter, connected to an outlet tube **11.** An outlet in the base of the filtering compartment is provided for removal of the insoluble solid matter, connected to an outlet tube **12.** A dosing system **13** is connected to the outlet tube **12** of the filtering compartment for removal of the filtered aqueous solution. In the embodiment shown, a Venturi-based system is shown, connected with two flexible tubes **a** and **b** to an external water line (not shown).

While aspects of the present invention have been particularly shown and described with reference to the embodiments above, it will be understood by those skilled in the art that various additional embodiments may be contemplated by the modification of the disclosed devices, methods and systems without departing from the spirit and scope of what is disclosed. Such embodiments should be understood to fall within the scope of the present invention as determined based upon the claims and any equivalents thereof.

## Claims

1. Device (1) for dissolving in water an essentially water-soluble substance comprising insoluble solid matter, for filtering the aqueous solution of the essentially water-soluble substance to remove the insoluble solid matter, and for dosing the filtered aqueous solution of the essentially water-soluble substance to an external water line, comprising :
(i) a container (2) for holding an aqueous liquid, wherein the interior of the container is divided into two separate compartments, respectively a mixing compartment (3) and a filtering compartment (4), separated by a vertically positioned filter screen (5) comprising a filter (6),
(ii) a mixing means (10) positioned in the mixing compartment (3),
(iii) an outlet in the lower half of one of the walls or in the base of the mixing compartment for removal of the insoluble solid matter, and
(iv) a dosing system (13) connected, at its input end, to an outlet in the lower half of the filtering compartment for removal of the filtered aqueous solution, and, at its output end, designed to be connected to an external water line.

2. Device (1) according to claim 1, wherein the container (2) has a substantially rectangular shape, defined by four upright rectangular side walls and a rectangular bottom wall.

3. Device (1) according to any one of claims 1 to 2, wherein the container (2) is positioned on a movable metal frame (7).

4. Device (1) according to any one of claims 1 to 3, wherein the volume ratio of the filtering compartment (4) to the mixing compartment (3) ranges from 1:1 to 1:5, preferable is 1:3.

5. Device (1) according to any one of claims 1 to 4, wherein the container (2) is made of polyethylene, preferably non-translucent polyethylene.

6. Device (1) according to anyone of claims 1 to 5, wherein the mixing compartment (3) is provided with a water inlet (9).

7. Device (1) according to any one of claims 1 to 6, wherein either one or both of the compartments is closed off by a lid, preferably wherein the lid is removable.

8. Device (1) according to claim 7, wherein the lid on the mixing compartment (3) comprises an open grid.

9. Device (1) according to anyone of claims 1 to 8, wherein the filter (6) in the filter screen (5) comprises more than about 50 %, preferably more than about 70 %, at most about 95 % of the filter screen surface.

10. Device (1) according to anyone of claims 1 to 9, wherein the filter (6) has a mesh size ranging between 50 and 200 micrometres.

11. Device (1) according to anyone of claims 1 to 10, wherein the mixing means (10) are selected from a manual mixer, a battery-operated 24 V-mixer, a combustion engine-operated mixer, and an electrical 220 V-mixer.

12. Device (1) according to anyone of claims 1 to 11, wherein the mixing compartment (3) comprises an outlet in the lower half of the mixing compartment for removal of insoluble solid matter.

13. Device (1) according to anyone of claims 1 to 12, wherein the dosing system (13) is a Venturi-based system or a Dosatron©.

14. Method for dissolving in water a water-soluble substance comprising insoluble solid matter, for filtering the aqueous solution of the essentially water-soluble substance to remove the insoluble solid matter, and for dosing the filtered aqueous solution of the essentially water-soluble substance to an external water line, comprising :
(i) providing a device as claimed in any one of claims 1 to 13;
(ii) providing an amount of water and water-soluble substance comprising insoluble solid matter into the mixing compartment (3);
(iii) activating the mixing means (10) until the essentially water-soluble substance comprising insoluble solid matter is dissolved; and
(iv) activating the dosage system (13).

15. Use of the device according to any one of claims 1 to 13 for removing insoluble solid matter from an essentially soluble fertilizer by dissolution of the essentially soluble fertilizer in water and separation of the insoluble solid matter through filtration.
